Europäisches Patentamt

European Patent Office

Office européen des brevets

(19)

(11) Numéro de publication: **0 223 689 B1**

(12) FASCICULE DE BREVET EUROPEEN

(45) Date de publication du fascicule du brevet:
12.12.90

(51) Int. Cl.⁵: **H04N 11/02**, H04N 11/06

(21) Numéro de dépôt: 86402463.3

(22) Date de dépôt: 04.11.86

(54) Système pour la transmission de signaux de télévision en couleurs sur canaux ou lignes de transmission à bande étroite.

(30) Priorité: 08.11.85 FR 8516602

(43) Date de publication de la demande:
27.05.87 Bulletin 87/22

(45) Mention de la délivrance du brevet:
12.12.90 Bulletin 90/50

(84) Etats contractants désignés:
DE GB IT NL

(56) Documents cités:
DE-A- 3 202 783
GB-A- 2 140 242
US-A- 4 210 927
US-A- 4 335 393
US-A- 4 400 717

(73) Titulaire: THOMSON VIDEO EQUIPEMENT, 17, rue du Petit Albi, F-95800 Cergy Saint Christophe(FR)

(72) Inventeur: Cavro, Philippe, THOMSON-CSF SCPI 19, avenue de Messine, F-75008 Paris(FR)
Inventeur: Rychembusch, René, THOMSON-CSF SCPI 19, avenue de Messine, F-75008 Paris(FR)

(74) Mandataire: Lincot, Georges et al, THOMSON-CSF SCPI, F-92045 PARIS LA DEFENSE CEDEX 67(FR)

EP 0 223 689 B1

**Description**

La présente invention concerne un système pour la transmission de signaux de télévision en couleurs sur canaux ou lignes de transmission à bande étroite.

La transmission de signaux de télévision sur des canaux ou des lignes de transmission à bande étroite exige l'emploi de techniques numériques de compression et de décompression de l'image. Selon ces techniques, le signal de télévision est converti à l'émission en échantillons numériques pour être mémorisés dans une mémoire de la façon par exemple décrite dans le brevet US-A 4 335 393, mais à la différence de ce qui est décrit dans ce document, les échantillons sont ensuite restitués à une cadence beaucoup plus lente que celle qui a permis leur mémorisation pour soit, être retransmis directement sur la ligne ou le canal de transmission ou soit encore, permettre la reconstitution d'un signal de télévision analogique avec un format adapté aux caractéristiques de la ligne ou du canal audiofréquence utilisés.

La transformation à l'émission du signal de télévision en un signal ayant les caractéristiques d'un signal audiofréquence a pour avantage qu'elle permet d'effectuer des enregistrements sur des supports peu coûteux tels que des bandes magnétiques à l'aide de simples magnétophones. Mais cette technique d'enregistrement complique beaucoup la réalisation en réception des dispositifs de restitution de l'image. En effet, il est impératif de conserver durant tout le traitement du signal la position précise de l'angle de phase de la sous-porteuse couleur, non seulement à l'emplacement qu'elle doit occuper dans l'espace réservé à chaque ligne à l'intérieur du signal vidéo, mais encore, de lignes à lignes et de trames à trames pour permettre un rendu de l'image retransmise acceptable par les observateurs. Lorsque le signal à transmettre présente des caractéristiques variant très peu dans le temps, comme c'est généralement le cas des signaux issus directement des caméras de télévision, les solutions pour résoudre ce problème conduisent à des réalisations simples. Par contre, lorsque les signaux à transmettre sont au préalable enregistrés sur magnétophone, les fluctuations de la vitesse de défilement de la bande magnétique en face des cellules de lecture rendent difficile le repérage précis des composantes du signal de télévision qui a été enregistré. Cette difficulté entraine des complications et imperfections dans les modes de réalisation des dispositifs de réception de l'image des récepteurs connus.

Le but de l'invention est de pallier les inconvénients précités en apportant une solution simple au problème de la fluctuation dans le temps du signal de télévision et suffisante pour n'entrainer aucun défaut gênant dans l'image restituée.

A cet effet, l'invention a pour objet, un système pour la transmission de signaux de télévision en couleurs sur canaux ou lignes de transmission à bande étroite du type comprenant:

– un transmetteur comprenant, un convertisseur analogique-numérique pour convertir le signal de télévision à transmettre en échantillons de luminance et en échantillons de chrominance, des moyens de mémorisation couplés au convertisseur analogique-numérique pour mémoriser les échantillons de luminance et de chrominance fournis par le convertisseur analogique-numérique, des moyens de lecture des moyens de mémorisation pour extraire à une cadence beaucoup plus lente les échantillons de luminance puis les échantillons de chrominance relatifs à chacune des lignes de l'image mémorisée, une logique de mise au format couplée aux moyens de mémorisation pour juxtaposer les échantillons de chaque ligne à transmettre au fur et à mesure de leur extraction des moyens de mémorisation et pour insérer entre chaque suite d'échantillons de luminance et de chrominance des signaux de repérage de chacune des suites des échantillons ainsi juxtaposés, et des moyens de conversion numérique-analogique pour convertir chaque suite d'échantillons de luminance et de chrominance et former le signal analogique à transmettre;

– et au moins un récepteur, couplé au transmetteur par le canal ou la ligne de transmission, comprenant un convertisseur analogique-numérique pour transformer le signal analogique transmis par le transmetteur en au moins une première suite d'échantillons de luminance et une deuxième suite d'échantillons de chrominance, des moyens de mémorisation des suites d'échantillons de signaux de luminance et de chrominance fournis par le convertisseur analogique-numérique et des moyens de conversion numérique-analogique couplés aux moyens de mémorisation pour reconstituer le signal de télévision transmis sous une forme apte à permettre sa visualisation sur un écran de télévision standard caractérisé en ce que les moyens de conversion de l'émetteur sont constitués par un synthétiseur programmable dont la fréquence est commandée linéairement en fonction de l'amplitude des échantillons lus dans les moyens de mémorisation et par un convertisseur fréquence-tension couplé au synthétiseur programmable pour convertir la fréquence fournie par le synthétiseur programmable en une tension proportionnelle à cette fréquence et par un dispositif de filtrage et en ce que les moyens de conversion du récepteur comprennent un dispositif de dématriçage couplé aux sorties des mémoires de luminance et de chrominance au travers d'un convertisseur numérique-analogique.

Le système, selon l'invention, a principalement pour avantage, qu'il permet de réduire considérablement les défauts qui pourraient se produire lors de la reconstitution d'une image à partir notamment de signaux vidéo lus sur des bandes magnétiques. La constitution, dans le transmetteur, de suites de signaux de luminance séparées de suites de signaux de chrominance par des signaux de repérage, permet de retrouver sans ambiguité à la réception les signaux de luminance et de chrominance relatifs à chacune des lignes de l'image. Il est ainsi possible de reconstruire de façon fidèle le signal de télévision quelques

2

soient les fluctuations de vitesse des bandes magnétiques utilisées lors de l'enregistrement du signal de télévision à l'aide d'un dispositif de transmission à bande étroite selon l'invention.

D'autres caractéristiques et avantages de l'invention apparaîtront à l'aide de la description qui va suivre faite au regard des dessins annexés donnés uniquement à titre d'exemple et dans lesquels :

- la figure 1 représente un des modes de réalisation du dispositif de transmission selon l'invention ;
- la figure 2 illustre l'enchainement des composantes de luminance et de chrominance d'un signal de télévision obtenu à l'aide du dispositif de transmission de la figure 1 ;
- la figure 3 est un mode de réalisation des logiques de mise au format et du synthétiseur programmable de la figure 1 ;
- la figure 4 est une représentation d'un mode de réalisation d'un dispositif de réception selon l'invention.

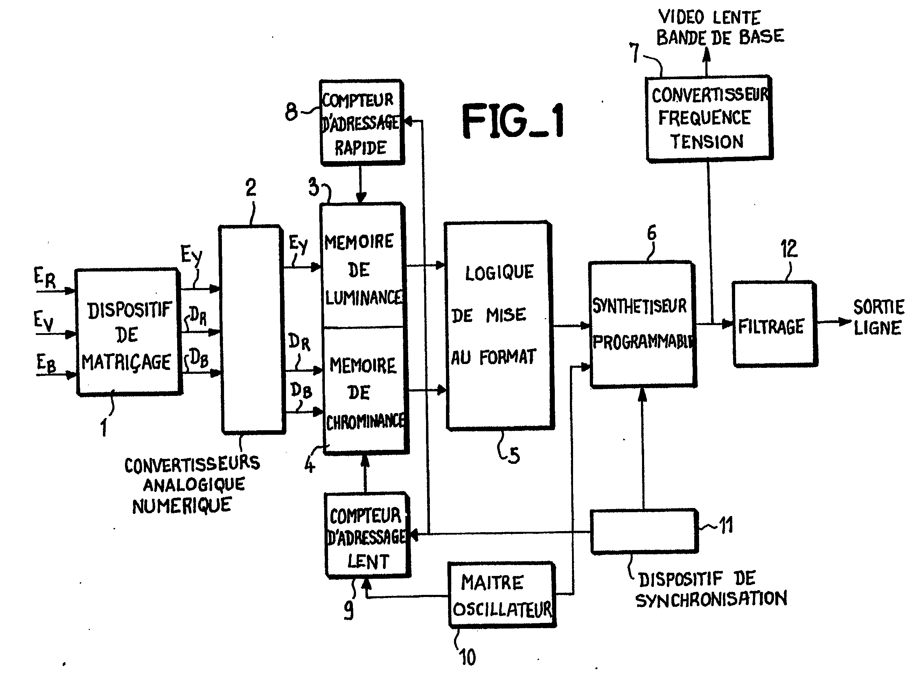

Le dispositif de transmission qui est représenté à la figure 1 comprend, un dispositif de matriçage 1, deux convertisseurs analogiques-numériques 2, des moyens de mémorisation constitués par une mémoire de luminance 3 et une mémoire de chrominance 4, une logique de mise au format 5, des moyens de conversion numérique-analogique constitués d'un synthétiseur programmable 6 et d'un convertisseur fréquence-tension 7. Le dispositif de transmission comprend également un compteur d'adressage rapide 8, un compteur d'adressage lent 9, un maitre oscillateur 10, un dispositif de synchronisation des signaux de chrominance et de luminance 11 et un dispositif de filtrage 12.

Le dispositif de matriçage 1 est conçu pour recevoir sur ses entrées les signaux de télévision rouge, vert et bleu habituellement fournis par les caméras de télévision pour les transformer de façon connue en une composante de luminance $E_Y$ et en deux composantes de différence de couleur $D_R$ et $D_B$. Les composantes $E_Y$ , $D_R$ et $D_B$ sont appliquées à l'entrée du convertisseur analogique-numérique 2. Sur la figure 1, $E_R$ , $E_V$ et $E_B$ désignent les signaux primaires représentant les composantes rouge, verte et bleue du signal de télévision et ces signaux sont appliqués à l'entrée du dispositif de matriçage 1. L'élaboration par le dispositif de matriçage des signaux $E_Y$ , $D_R$ et $D_B$ est effectuée, de façon connue, en respectant les relations

$$E_Y = 0,3\ E_R + 0,59\ E_V + 0,11\ E_B$$
$$D_R = E_R - E_Y$$
$$D_B = E_B - E_Y .$$

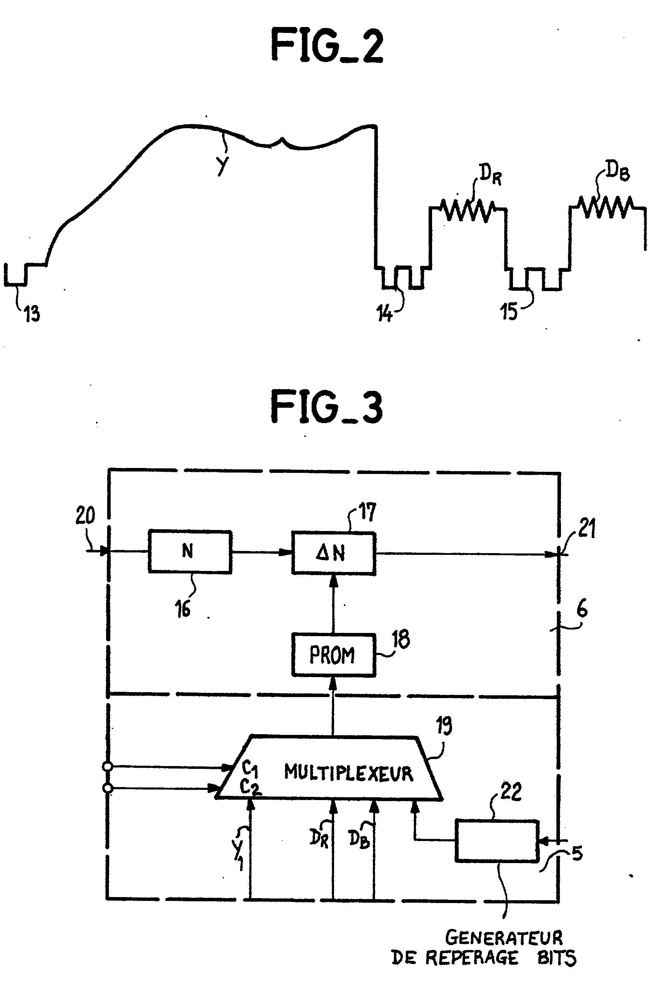

La conversion en échantillons numériques des signaux $E_Y$ , $D_R$ , $D_B$ , est également effectuée de façon connue par les convertisseurs analogique-numérique 2. Dans un mode préféré de réalisation de l'invention, le signal analogique $E_Y$ est converti par un convertisseur analogique-numérique 2 en 512 échantillons par ligne d'image, codés huit bits. Les signaux analogiques représentant les différences de couleur $D_R$ et $D_B$ sont également codés de façon connue en 256 échantillons codés chacun sur huit bits. Les échantillons fournis par les convertisseurs analogique-numérique 2 formant la composante de luminance $E_Y$ d'une part, et ceux des composantes de chrominance $D_R$ et $D_B$ d'autre part, sont appliqués respectivement sur les entrées de données des mémoires 3 et 4 pour être enregistrés respectivement dans chacune de celles-ci à des emplacements adressés par le compteur d'adresses rapide 8. Dans un mode préféré de réalisation de l'invention la progression du compteur 8 s'effectue de manière à permettre l'écriture en mémoire d'un échantillon toutes les 100 nanosecondes. La lecture des mémoires 3 et 4 est exécutée à vitesse beaucoup plus lente à l'aide du compteur lent 9 qui progresse, dans le mode préféré de réalisation de l'invention, à une fréquence basse voisine par exemple de 15 kilohertz. Les échantillons qui sont lus à l'intérieur des mémoires 3 et 4 aux emplacements désignés par le compteur d'adresses 9 sont appliqués sur les entrées de la logique de mise au format 5 qui transforme en un train binaire les suites d'échantillons de luminance et de chrominance lues successivement dans les mémoires 3 et 4. Dans le mode préféré de réalisation de l'invention, la logique de mise au format 5 construit, pour chacune des lignes d'image, une première suite d'échantillons $Y_1$ formés par les 512 points de chaque ligne d'image, une deuxième suite d'échantillons $R_1$ formés par 256 points de l'information de différence de couleurs $D_R$ lus dans la mémoire 4 et enfin une troisième suite $B_1$ de 256 points de l'information $D_B$ lus dans la mémoire 4. Les suites $Y_1$ , $R_1$ , $B_1$ sont juxtaposées en file les unes derrière les autres pour former un train numérique et chaque suite est séparée de la suite qui la précède ou qui la succède par des signaux de repérage afin de permettre l'identification de chacune des suites de luminance ou de chrominance dans le train numérique ainsi formé. Le train numérique formé par la logique de mise au format 5 est transmis à l'entrée du synthétiseur programmable 6 dont la fréquence de sortie est commandée à partir de la grandeur de chacun des échantillons fournis par la logique de mise au format 5. La valeur de la fréquence fournie par le synthétiseur de fréquence programmable 6 est transformée par le convertisseur 7 en signaux analogiques dont l'amplitude est proportionnelle à la fréquence du signal engendré par le synthétiseur programmable 6. Comme la fréquence du synthétiseur programmable 6 est proportionnelle à la grandeur des échantillons de chacune des suites de luminance ou de chrominance fournies par la logique de mise au format 5, il en résulte que le signal analogique fourni par le convertisseur 7 a une amplitude proportionnelle à la grandeur de chacun des échantillons engendrés par la logique de mise au format 5. Le convertisseur 7 fournit dans ces conditions un signal de télévision analogique composé de suites séparées de signaux analogiques de luminance Y et de signaux analogique de chrominance $D_R$, $D_B$ suivant la représentation de la figure 2. Pour permettre d'identifier chacun des signaux analogiques à l'intérieur de chaque suite les signaux analogiques sont séparés les uns des autres par des signaux de repérage 13, 14 et 15.

Une représentation de l'ensemble composé de la logique de mise au format 5 couplée au synthétiseur de fréquence programmable 6 est représentée à la figure 3 à l'intérieur de rectangles en pointillés. Sur la figure 3 la logique de mise au format 5 se réduit à un circuit de multiplexage 19 qui est relié par trois entrées aux sorties correspondantes des mémoires de luminance 3 et de chrominance 4 qui transmettent respectivement les échantillons pair et impair du signal de luminance $E_y$ et des signaux de différence de couleur $D_R$ et $D_B$. Le circuit multiplexeur 19 reçoit sur ses entrées de commande $C_1$ et $C_2$ les ordres de multiplexage Y/C fournis par le dispositif de synchronisation 11 de la figure 1. Il effectue successivement la connexion des sorties des mémoires 3 et 4 à l'entrée du synthétiseur de fréquence programmable 6 dont une réalisation, montrée à la figure 3 à l'intérieur d'un rectangle en pointillés, est constituée d'un compteur à rang fixe 16, d'un compteur programmable 17 et d'une mémoire morte programmable 18. Le compteur de rang fixe 16 a son entrée couplée à la sortie du maitre oscillateur 10 de la figure 1. La fréquence de travail du maitre oscillateur 10 est réglée à 80 MHz, dans l'exemple préféré de réalisation de l'invention. La sortie du compteur à rang fixe 16 est reliée à l'entrée de comptage du compteur programmable 17 dont le rang de division est fixé par les contenus de la mémoire morte programmable 18. La mémoire 18 assigne, en fonction de la grandeur de chacun des échantillons fournis par l'une des mémoires 3 ou 4, une valeur de rang au compteur programmable 17 pour affecter la division effectuée par ce compteur et modifier la fréquence de sortie des signaux fournis par celui-ci de façon proportionnelle à l'amplitude des échantillons fournis par l'une ou l'autre des mémoires 3 et 4. La sortie du compteur programmable 17 est couplée par la liaison 21 à l'entrée du convertisseur fréquence-tension 7 de la figure 1. L'amplitude de la tension de sortie du convertisseur 7 suit l'amplitude des suites des échantillons fournis par l'ensemble des mémoires 3 et 4 de la manière qui est représentée à la figure 2. La logique de mise au format comprend en plus un générateur de bits de repérage 22 qui sont appliqués sur une cinquième entrée du multiplexeur 19. Ces bits de repérage sont appliqués par le multiplexeur 19 entre chaque suite d'échantillons fournis par les mémoires 3 et 4 à l'entrée de la mémoire morte programmable 18 ce qui modifie la capacité de comptage du compteur programmable 17 et la fréquence du synthétiseur programmable 6 pour obtenir en sortie du convertisseur fréquence-tension 7 des signaux de repérage du type de ceux représentés en 13, 14 et 15 sur la figure 2.

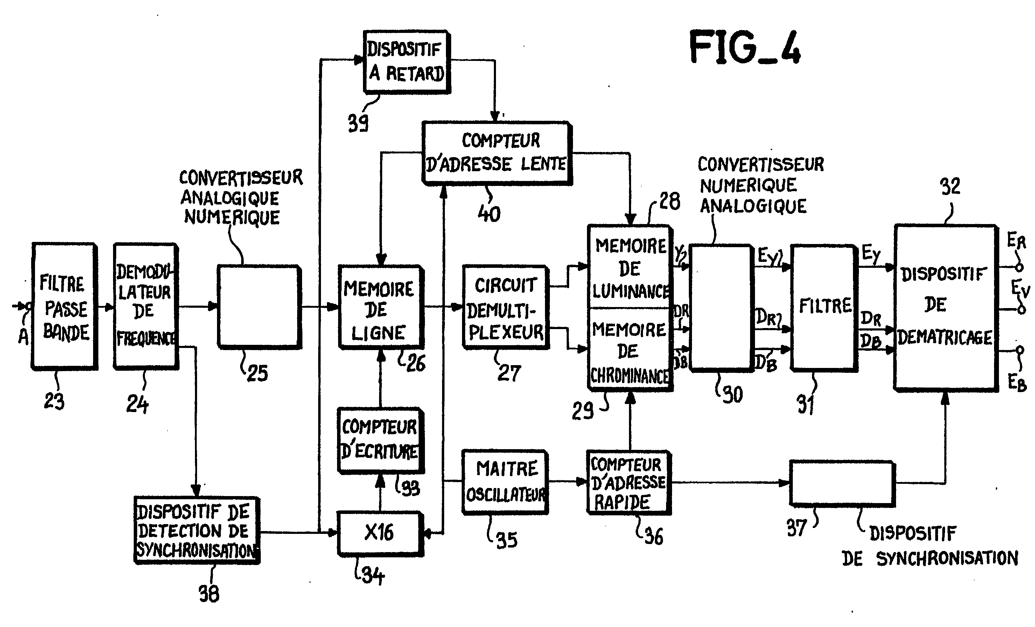

Le dispositif de réception selon l'invention est représenté à la figure 4. Le récepteur, qui est représenté à la figure 4, comprend un filtre passe-bande 23, un démodulateur de fréquence 24, un convertisseur analogique-numérique 25, une mémoire de ligne 26, un circuit démultiplexeur 27, une mémoire de luminance 28, une mémoire de chrominance 29, des moyens de conversion numérique-analogique formés par un convertisseur numérique-analogique 30, un filtre 31, et un dispositif de dématriçage 32. Le récepteur comprend également un compteur d'écriture 33 commandé à partir d'un multiplicateur par seize 34 et d'un maitre oscillateur 35, un compteur d'adresse rapide 36, un dispositif de synchronisation 37, un dispositif de détection de synchronisation 38, un dispositif à retard 39 et un compteur d'adresse lente 40. Le dispositif de réception représenté à la figure 4 est plus spécialement adapté à la réception de signaux vidéofréquence transmis par un dispositif du type de celui qui est représenté à la figure 1, au moyen, par exemple, du canal audiofréquence d'un émetteur à modulation de fréquence. Cette adaptation est réalisée à l'aide du filtre passe-bande 23 et du démodulateur de fréquence 24 qui reconstituent le signal vidéofréquence en bande de base à partir du signal reçu du canal audiofréquence appliqué sur l'entrée A du filtre 23. Dans ce mode d'utilisation le convertisseur analogique-numérique 25 est couplé à la sortie du démodulateur de fréquence 24, pour convertir le signal analogique en bande de base fournie par le démodulateur de fréquence 24 en échantillons numériques. Les échantillons numériques obtenus sont appliqués à l'entrée de la mémoire de ligne 26 qui, pour être compatible avec le dispositif représenté à la figure 1, possède une capacité de mémorisation de 256 échantillons de huit bits chacun. Ces échantillons sont rentrés à l'intérieur de la mémoire de ligne 26 à l'aide du compteur d'écriture 33 qui est piloté par le maitre oscillateur 35 à une vitesse qui est très supérieure, dans l'exemple de la figure 4, à la fréquence d'échantillonnage du convertisseur analogique-numérique 25. Les échantillons mémorisés à l'intérieur de la mémoire de ligne 26 sont lus par le compteur de lecture 40 et sont appliqués à l'entrée du circuit démultiplexeur 27 qui oriente les échantillons fournis par la mémoire de ligne 26 soit, à l'entrée de la mémoire de luminance 28 soit, à l'entrée de la mémoire de chrominance 29. Les sorties des mémoires 28 et 29 sont couplées au convertisseur numérique-analogique 30 qui restitue, sous forme analogique, les suites des échantillons mémorisés à l'intérieur des mémoires 28 et 29 afin de reformer le signal analogique de luminance $E_Y$ et les signaux de différence de couleur $D_R$ et $D_B$. Ces signaux de luminance et de chrominance, après filtrage et mise en forme par le filtre 31, sont appliqués au dispositif de dématriçage 32 qui restitue sur ses sorties les signaux primaires $E_R$, $E_V$ et $E_B$ sous une forme directement acceptable par un écran de télévision standard non représenté.

Bien que les principes de la présente invention aient été décrits ci-dessus en relation avec un exemple particulier de réalisation, il faut comprendre que la description n'a été faite qu'à titre d'exemple et ne limite pas la portée de l'invention. En particulier on comprendra que l'invention peut également s'appliquer aux systèmes où l'information de couleur est transmise une ligne sur deux. Dans ce cas des moyens de filtrage pourront être installés dans le transmetteur pour éviter les phénomènes de battement connus sous les noms de "cross couleur" ou de "cross luminance" dûs aux transitions horizontales colorées. Un dispositif de filtrage vertical pourra être réalisé en transmettant une combinaison linéaire des informations de couleur et en associant par exemple les suites numériques d'échantillons de luminance et de chrominance de la façon suivante

$$Y_1 , R_1 , Y_2 , B_1 , Y_3 , R_2 , ....$$

$$\text{avec } R_1 = \frac{D_{R_1} + D_{R_2}}{2} \qquad B_1 = \frac{D_{B_1} + D_{B_2}}{2}$$

$$R_2 = \frac{D_{R_3} + D_{R_4}}{2}$$

A l'émission, la constitution de $R_1$ et $B_1$ etc... sera d'autant plus facilitée qu'elle sera à effectuer à vitesse lente.

A la réception on pourra reconstituer l'information couleur à chaque ligne transmise en insérant une mémoire de ligne chrominance travaillant au rythme du signal de télévision pour remplir les mémoires une ligne sur deux. Mais pour conserver l'avantage de la compatibilité matérielle entre deux récepteurs chrominance pleine définition ou demi définition verticales, on pourra également préférer d'inscrire en mémoire chrominance deux lignes successives identiques en gardant la capacité de mémoire chrominance originale.

## Revendications

1. Système pour la transmission de signaux de télévision en couleurs sur canaux ou lignes de transmission à bande étroite du type comprenant:

- un transmetteur comprenant un convertisseur analogique-numérique (2) pour convertir le signal de télévision à transmettre en échantillons de luminance et en échantillons de chrominance, des moyens de mémorisation (3, 4) couplés au convertisseur analogique-numérique (2) pour mémoriser les échantillons de luminance et de chrominance fournis par le convertisseur analogique-numérique (2), des moyens de lecture (9) des moyens de mémorisation (3, 4) pour extraire à une cadence beaucoup plus lente les échantillons de luminance puis les échantillons de chrominance relatifs à chacune des lignes de l'image mémorisée, une logique de mise au format (5) couplée aux moyens de mémorisation (3, 4) pour juxtaposer les échantillons de chaque ligne à transmettre au fur et à mesure de leur extraction des moyens de mémorisation (3, 4) et pour insérer entre chaque suite d'échantillons de luminance et de chrominance des signaux de repérage (13, 14, 15) de chacune des suites d'échantillons ainsi juxtaposés, et des moyens de conversion (6, 7) pour convertir chaque suite d'échantillons de luminance et de chrominance et former le signal analogique à transmettre;

- et au moins un récepteur, couplé au transmetteur par le canal ou la ligne de transmission, comprenant un convertisseur analogique-numérique (25) pour transformer le signal analogique transmis par le transmetteur en au moins une première suite d'échantillons de luminance et une deuxième suite d'échantillons de chrominance, des moyens de mémorisation (26, 28, 29) des suites d'échantillons de signaux de luminance et de chrominance fournis par le convertisseur analogique-numérique (25) et des moyens de conversion numérique-analogique (30, 31, 32) couplés aux moyens de mémorisation (28, 29) pour reconstituer le signal de télévision transmis sous une forme apte à permettre sa visualisation sur un écran de télévision standard caractérisé en ce que les moyens de conversion (6, 7) de l'émetteur sont constitués par un synthétiseur programmable (6) dont la fréquence est commandée linéairement en fonction de l'amplitude des échantillons lus dans les moyens de mémorisation (3, 4) et par un convertisseur fréquence-tension (7) couplé au synthétiseur programmable (6) pour convertir la fréquence fournie par le synthétiseur programmable (6) en une tension proportionnelle à cette fréquence et par un dispositif de filtrage (12) et en ce que les moyens de conversion (30, 31, 32) du récepteur comprennent un dispositif de dématriçage (32) couplé aux sorties des mémoires de luminance et de chrominance au travers d'un convertisseur numérique-analogique (30).

2. Système selon la revendication 1, caractérisé en ce qu'il comprend en plus un dispositif de matriçage (1) pour convertir les signaux primaires ($E_R$, $E_V$, $E_B$) représentant les composantes rouge, verte et bleue du signal de télévision en signaux de luminance $E_Y$ et de différence de couleur $D_R$ et $D_B$ et appliquer les signaux ainsi obtenus à l'entrée du convertisseur analogique-numérique (2).

3. Système selon la revendication 2, caractérisé en ce que la logique de mise au format (5) fournit pour chacune des lignes d'image une première suite d'échantillons $Y_1$ formés par les 512 points de chaque ligne de luminance, une deuxième suite d'échantillons $R_1$ formés par les 256 points de l'information de différence de couleurs $D_R$ et une troisième suite $B_1$ de 256 points de l'information de différence de couleur $D_B$.

## Claims

1. A system for the transmission of colour television signals on narrow-band channels or tranmission lines, comprising:

- a transmitter including an analog-digital-converter (2) for converting the television signal to be transmitted into luminance samples and in chrominance samples, storage means (3, 4) coupled to the analogdigital-converter (2) for storing the luminance and the chrominance samples delivered by the analog-digitalconverter (2), read means (9) for reading the storage means (3, 4) for extracting at a much slower rate the luminance samples and then the chrominance samples relative to each image line stored, a formating logic (5) coupled to the storage means (3, 4) for juxtaposing the samples of each line to be transmitted according to the rythm of their extraction from the storage means (3, 4) and for inserting between each luminance and chrominance sample string signals (13, 14, 15) for marking each of the juxtaposed sample strings, and conversion means (6, 7) for converting each luminance and chrominance sample string and for forming the analog signal to be transmitted;

- and at least one receiver, coupled to the transmitter via the channel or the transmission line, including an analog-digital converter (25) for transforming the analog signal transmitted by the transmitter into at least one first string of luminance samples and one second string of chrominance samples, means (26, 28, 29) for storing the sample strings of the luminance and chrominance signals delivered by the analog-digitalconverter (25), and digital-analog-conversion means (30, 31, 32) coupled to the storage means (28, 29) for restoring the transmitted television signal in a form apt to allow its visualization on a standard television screen, characterized in that the conversion means (6, 7) of the transmitter are constituted of a programmable synthesizer (6), whose frequency is linearly controlled as a function of the amplitude of the samples read out from the storage means (3, 4), and of a frequency-voltage converter (7) coupled to the programmable synthesizer (6) for converting the frequency delivered by the programmable synthesizer (6) into voltage proportional to said frequency, and of a filtering device (12), and in that the conversion means (30, 31, 32) of the receiver include a dematrixing device (32) coupled to the outputs of the luminance and chrominance storages via a digital-analog-converter (30).

2. A system according to claim 1, characterized in that it includes in addition a matrixing device (1) for converting the primary signals ($E_R$, $E_V$, $E_B$), which represent the red, green and blue components of the television signal, into signals of the luminance $E_Y$ and of the colour difference $D_R$ and $D_B$, and for applying these signals to the input of the analog-digital-converter (2).

3. A system according to claim 2, characterized in that the formating logic (5) delivers for each image line a first sample string $Y_1$ consisting of the 512 luminance points of each line, a second sample string $R_1$ consisting of the 256 information points of the colour difference $D_R$, and a third string B1 of the 256 information points of the colour difference $D_B$.

## Patentansprüche

1. System zur Übertragung von Farbfernsehsignalen auf schmalbandigen Kanälen und Übertragungsleitungen, bestehend aus

- einem Sender mit einem Analog-Digital-Umsetzer (2) zur Umwandlung des zu übertragenden Fernsehsignals in Helligkeitstastproben und in Farbtastproben, mit Speichermitteln (3, 4), die an den Analog-Digital-Umsetzer (2) zum Speichern der vom Analog-Digital-Umsetzer (2) gelieferten Helligkeits- und Farbtastproben angeschlossen sind, mit Lesemitteln (9) tür die Speichermittel (3, 4) zur Entnahme der Helligkeitstastproben und anschließend der Farbtastproben jeder gespeicherten Bildzeile mit einer wesentlich langsameren Taktfolge, ein Formgebungskreis (5), der an die Speichermittel (3, 4) zum Gegenüberstellen der zu übertragenden Tastproben jeder Zeile nach Maßgabe ihrer Entnahme aus den Speichermitteln (3, 4) und zum Einfügen von Signalen (13, 14, 15) zur Markierung jeder Tastprobenfolge zwischen jede Helligkeits- und Farbtastprobenfolge angeschlossen ist, und mit Umwandlungsmitteln (6, 7) zum Umwandeln jeder Helligkeits- und Farbtastprobenfolge und zum Bilden des zu übertragenden Analogsignals;

- und mindestens einem Empfänger, der über den Kanal oder die Übertragungsleitung an den Sender angeschlossen ist und einen Analog-Digital-Umsetzer (25) zum Umwandeln des übertragenen Analogsignals in mindestens eine erste Folge von Helligkeitstastproben und eine zweite Folge von Farbtastproben, Speichermittel (26, 28, 29) für die vom Analog-Digital-Umsetzer (25) gelieferten Tastprobenfolgen der Helligkeits- und Farbsignale, und Analog-Digital-Umsetzungsmittel (30, 31, 32) aufweist, die an die Speichermittel (28, 29) zur Wiederherstellung des übertragenen Fernsehsignals in einer für die Sichtbarmachung auf einem Standardfernsehschirm geeignete Form angeschlossen sind, dadurch gekennzeichnet, daß die Umwandlungsmittel (6, 7) des Senders aus einem programmierbaren Synthesizer (6), dessen Frequenz linear in Abhängigkeit von der Amplitude der aus den Speichermitteln (3, 4) ausgelesenen Tastproben gesteuert wird, und aus einem Frequenz-Spannungswandler (7), der an den programmierbaren Synthesizer (6) zur Umwandlung der vom programmierbaren Synthesizer (7) gelieferten Frequenz in eine zu dieser Frequenz proportionale Spannung angeschlossen ist, sowie aus einer Filtervorrichtung (12) bestehen, und daß die Umsetzungsmittel (30, 31, 32) des Empfängers eine Entmatrizierungsvorrichtung (32) aufweisen, die über einen Digital-Analog-Umsetzer (30) an die Ausgänge der Helligkeits- und Farbtastprobenspeicher angeschlossen sind.

2. System nach Anspruch 1, dadurch gekennzeichnet, daß es weiter eine Matrizierungsvorrichtung (1) zum Umwandeln der die Komponenten Rot, Grün und Blau des Fernsehsignals darstellenden Primärsignale ($E_R$, $E_V$, $E_B$) in Helligkeitssignale ($E_Y$) und in Farbunterschiedssignale $D_R$ und $D_B$ aufweist und die so gewonnenen Signale an den Eingang des Analog-Digital-Umsetzers (2) anlegt.

3. System nach Anspruch 2, dadurch gekennzeichnet, daß die Formgebungslogik (5) für jede Bildzeile eine erste Tastprobenfolge $Y_1$, bestehend aus den 512 Helligkeitspunkten jeder Zeile, eine zweite Tastprobenfolge $R_1$, bestehend aus den 256 Informationspunkten des Farbunterschiedes $D_R$, und eine dritte Folge der 256 Informationspunkte des Farbunterschiedes $D_B$ liefert.

FIG_1

# FIG_2

13

$D_R$

$D_B$

Y

14

15

# FIG_3

20

N

17

$\Delta N$

21

16

6

PROM

18

19

$C_1$
$C_2$

MULTIPLEXEUR

22

$Y_1$

$D_R$   $D_B$

5

GENERATEUR
DE REPERAGE  BITS

# FIG_4

EP 0 223 689 B1